# DEMANDE DE BREVET EUROPEEN

(11) **EP 0 701 353 A1**
(43) Date de publication de la demande: **13.03.1996**
(21) Numéro de dépôt: 95202319.0
(22) Date de dépôt: 28.08.1995
(51) Int. Cl.: H04L 29/06

(54) **Système de transmission de données à routage adaptatif**

(30) Priorité: 07.09.1994 FR 9410723
(71) Demandeur: T.R.T. TELECOMMUNICATIONS RADIOELECTRIQUES ET TELEPHONIQUES, F-75013 Paris (FR); Philips Electronics N.V., NL-5621 BA Eindhoven (NL)
(72) Inventeur: Minot, Joel, Société Civile S.P.I.D., F-75008 Paris (FR); Salingre, Daniel, Société Civile S.P.I.D., F-75008 Paris (FR)
(74) Mandataire: Chaffraix, Jean

(57) **Abrégé**

L'invention se propose d'appliquer un protocole de routage adaptatif à un système de transmission de données fonctionnant en mode connecté.

Pour cela chaque noeud est doté d'une fonction de découverte de son voisinage lui permettant d'établir des sessions avec ses voisins sans les connaître préalablement, afin de leur transmettre des messages de reconnaissance indiquant son identifiant.

Chaque noeud dispose de plus d'un double identifiant, l'un d'eux étant constitué par le numéro de série du noeud, de telle sorte que celui-ci puisse être repéré dans le système avant toute configuration, et ce notamment par un terminal dédié à la gestion du système chargé de la configuration à distance des noeuds.

Applications: notamment aux systèmes destinés à l'interconnexion de réseaux locaux.

## Description

La présente invention concerne un système de transmission de données comportant une pluralité de noeuds reliés entre eux par des liaisons, certains de ces noeuds au moins étant dotés de moyens de découverte de leurs voisins pour la mise en oeuvre d'une fonction de routage adaptatif.

Elle a d'importantes applications dans le domaine des réseaux de transmission de données, et notamment des réseaux longue distance fonctionnant en mode connecté tels que des réseaux X25 par exemple, tout particulièrement lorsqu'ils sont utilisés pour l'interconnexion de réseaux locaux.

Un des problèmes essentiels rencontrés alors dans ce type de réseaux est la lourdeur et le risque d'erreur important résultant de la configuration manuelle des tables de routage.

Dans le domaine des réseaux locaux, il est connu d'utiliser des protocoles de routage adaptatif, décentralisé avec calcul local des routes, tel par exemple que le protocole IS-IS normalisé par l'OSI sous la référence 10589. De tels protocoles, qui permettent de créer et de mettre à jour automatiquement les tables de routage, supposent que chaque noeud soit capable de récupérer des informations sur tout ou partie du système, puis d'en déduire les meilleures routes vers les noeuds distants. Ce type de routage s'adapte donc dynamiquement aux évolutions de la topologie du système (dues par exemple à une surcharge, une panne, une mise en service ou une suppression d'une liaison ou d'un noeud).

L'invention se propose d'appliquer ce genre de protocole de routage adaptatif à des systèmes de transmission de données fonctionnant en mode connecté, et notamment à des réseaux longue distance de commutation par paquets.

Le problème essentiel qui se pose alors est celui de la découverte de ses voisins par chaque noeud du système puisque toute communication entre deux noeuds suppose au préalable l'établissement d'une session entre ces deux noeuds.

Pour cela, un système de transmission de données selon l'invention et tel que décrit dans le paragraphe introductif, est caractérisé en ce que, le système de transmission de données fonctionnant en mode connecté, afin de découvrir ses voisins, au moins deux de ces noeuds comportent des moyens pour:
- émettre un message d'appel sur au moins certaines de leurs liaisons,
- sur réception d'un tel message d'appel en provenance d'un noeud voisin, établir une session avec ledit noeud,
- dès qu'une session est établie avec un voisin, lui transmettre un message de reconnaissance indiquant leur propre identifiant.

Il est ainsi possible d'éviter toute configuration préalable des noeuds du système en ce qui concerne la topologie de l'ensemble du système: la reconnaissance de cette topologie se fait automatiquement.

Dans un mode de réalisation particulièrement avantageux d'un système de transmission de données selon l'invention, l'identifiant d'un noeud est composé de son numéro de série ainsi que de son adresse logique.

Ainsi lorsqu'un noeud ne peut être atteint par son adresse logique, il est toujours accessible par son numéro de série. En particulier, lorsque les noeuds sortent d'usine, un numéro de série unique leur a été attribué, mais leur adresse logique a été configurée à une valeur par défaut identique pour tous les noeuds. Le fait d'identifier chaque noeud à la fois par son numéro de série et par son adresse logique permet de le connecter à un réseau sans avoir configuré au préalable son adresse logique. Il sera alors repéré par l'ensemble du système à partir de son numéro de série.

Dans un autre mode de réalisation avantageux, un système selon l'invention comporte un terminal, appelé centre de gestion et dédié à la gestion du système, raccordé à un noeud par l'intermédiaire duquel il établit des sessions avec chacun des noeuds du système de façon à leur transmettre des informations de configuration.

Il est ainsi possible de configurer les adresses logiques de chaque noeud à distance, et de transmettre toute autre information de configuration nécessaire. L'invention permet ainsi d'éviter la configuration sur site des noeuds du système, et limite la phase d'installation du réseau à la connexion de ses différents équipements.

Dans un autre mode de réalisation d'un système selon l'invention, les noeuds du système qui sont dotés de ladite fonction de routage adaptatif sont répartis dans au moins un domaine de routage.

Cela permet d'assurer la coexistence dans un même système entre les noeuds disposant d'une fonction de routage adaptatif telle que décrite ci-dessus, et des noeuds classiques.

L'invention concerne également un noeud destiné à être utilisé dans un tel système, et plus particulièrement un commutateur X25 disposant d'une fonction de routage adaptatif telle que décrite ci-dessus.

D'autres particularités, détails et avantages de la présente invention apparaîtront dans la description qui va suivre en regard des dessins annexés qui sont donnés à titre d'exemple non limitatif et dans lesquels:
- la figure 1 représente un paquet d'appel X25,
- la figure 2 représente un réseau de télécommunications constituant un système selon l'invention,
- la figure 3 représente schématiquement le mode de fonctionnement d'un noeud doté d'une fonction de routage adaptatif,
- la figure 4 représente un commutateur X25 selon l'invention.

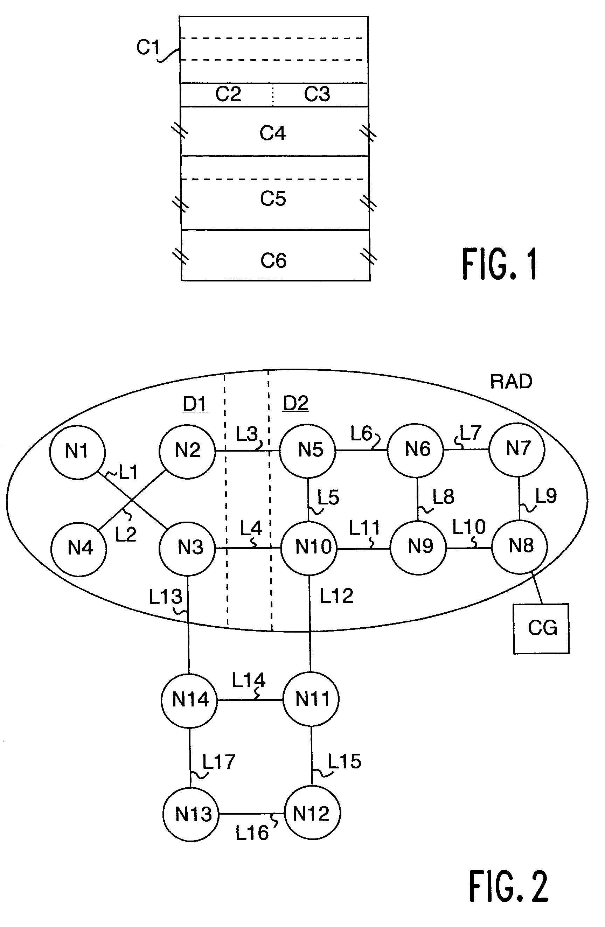

L'invention va maintenant être décrite à partir d'un réseau de transmission de données de type X25 représenté sur la figure 2. Elle est toutefois applicable à tout autre réseau fonctionnant en mode connecté.

D'après l'invention, certains noeuds d'un tel réseau sont dotés d'une fonction de routage adaptatif. Une telle fonction inclut en outre une fonction de découverte du voisinage immédiat du noeud, qui consiste à émettre sur chaque liaison du noeud, lorsqu'elle passe en service, un paquet d'appel au sens de la norme X25. Un tel paquet d'appel est représenté sur la figure 1. Il débute comme tous les paquet X25 par un entête C1 de trois octets qui indique, entre autre, un numéro de circuit virtuel et le type du paquet (ici il s'agit d'un paquet d'appel ce qui correspond au code 00001011). Cet entête C1 est suivi d'un champ indiquant la longueur des adresses appelant (C2) et appelé (C3), qui est lui-même suivi par le champ d'adresse proprement dit C4 (adresse X25 de l'appelant et de l'appelé). Vient alors un champ dit de services complémentaires C5 permettant de spécifier des caractéristiques particulières pour la connexion. Enfin, un champ de données C6 permet d'envoyer jusqu'à 16 octets de données dans le paquet d'appel. Selon l'invention, l'adresse de l'appelé spécifiée dans ce paquet d'appel est une adresse fixée par convention qui indique que ce paquet est à destination de la fonction de routage adaptatif des noeuds, et le champ données est utilisé pour indiquer une demande d'ouverture d'un circuit virtuel dédié au routage adaptatif.

Si les voisins immédiats du noeud répondent à ce paquet d'appel par une confirmation d'appel (champ type 00001111), on considère qu'ils sont également dotés d'une fonction de routage adaptatif selon l'invention.

Un circuit virtuel dédié au routage est alors établi avec chacun de ces voisins. Chaque circuit sert tout d'abord à l'échange entre les deux noeuds d'un paquet, dit paquet "Hello", défini dans la norme IS-IS. Un tel paquet "Hello", qui contient l'identifiant de son noeud source, permet ainsi à celui qui le reçoit de découvrir l'identifiant de son voisin. Puis, par la suite, ces circuits virtuels sont utilisés pour l'échange de paquets, dits paquets LSP, qui sont également définis par la norme IS-IS et contiennent une liste desdits voisins ainsi que des informations sur les liaisons entre le noeud source du paquet LSP et chacun des noeuds de la liste. De tels paquets LSP sont construits et diffusés dans le domaine de routage adaptatif suite à un échange de paquet "Hello" entre deux voisins, puis périodiquement et exceptionnellement à la suite d'une modification de la topologie du domaine. Chaque noeud enregistre dans une base, dite base LSP, le plus récent paquet LSP émis par chaque noeud du domaine. Cette base lui permet de calculer périodiquement des arbres des meilleures routes vers les autres noeuds du domaine.

D'après l'invention et conformément à la norme IS-IS, les informations concernant chaque liaison entre le noeud et ses voisins sont enregistrées dans un paquet LSP sous forme:
- d'un numéro de série du noeud voisin sur la liaison,
- d'un numéro de la liaison,
- et de trois métriques permettant de caractériser la qualité de la liaison en fonction d'un critère déterminé: une métrique qui représente le nombre de liaisons traversées, et dont la valeur est donc toujours égale à 1 entre deux noeuds voisins, une métrique financière indiquant le coût financier de la liaison, et une métrique de délai de transit qui prend en compte dynamiquement le trafic sur la liaison.

D'après l'invention, chaque noeud est repéré par un double identifiant: son numéro de série d'une part, et son adresse logique d'autre part. Cela signifie que les paquets "Hello" et LSP contiennent ce double identifiant. Dans un exemple de réalisation de l'invention, il a été choisi d'utiliser le champ "identifiant du noeud source" des paquets IS-IS pour indiquer le numéro de série du noeud, et les champs "adresse de domaine" pour indiquer différentes adresses d'un même noeud, et en particulier son adresse logique X25 (ces champs "adresse de domaine" étaient utilisés dans la norme IS-IS pour donner plusieurs identifiants de domaine à un même noeud).

Cela signifie également qu'un double accès aux arbres de routage est mis en place (par numéro de série et par adresse logique). Ainsi, lorsqu'un noeud appelant cherche à établir une communication avec un noeud appelé, deux cas se présentent. Dans le premier cas, le noeud appelant connaît le noeud appelé par son adresse logique. Il place alors cette adresse logique dans le champ prévu à cet effet dans le paquet d'appel X25. Dans le second cas, le noeud appelant ne connaît le noeud appelé que par son numéro de série. Il place alors dans le champ données du paquet d'appel X25 un indicateur indiquant que le routage doit être effectué sur le numéro de série du noeud appelé, suivi du numéro de série dudit noeud. Et il inscrit dans son champ adresse logique d'appelé, l'adresse fixée par convention indiquant que ce paquet est à destination de la fonction de routage adaptatif du noeud. Ainsi, chaque noeud qui reçoit un tel paquet d'appel, commence par lire le contenu du champ adresse logique de l'appelé. S'il s'agit de l'adresse fixée par convention, le paquet est transmis à la fonction de routage adaptatif du noeud qui lit les données transmises dans le paquet d'appel. Si ces données comportent ledit indicateur de routage, la fonction de routage adaptatif route ce paquet d'après son numéro de série. La route à utiliser pour le routage est donc recherchée dans l'arbre de routage correspondant à la métrique sélectionnée à partir dudit numéro de série. Si au contraire le champ adresse logique de l'appelé indique une adresse logique, la route à utiliser est recherchée dans l'arbre de routage à partir de cette adresse logique.

La figure 2 représente un exemple de réseau de transmission de données selon l'invention. Un tel réseau comporte une pluralité de noeuds numérotés N1 à N14. Le noeud N3 est respectivement relié aux noeuds N1, N10 et N14 par les liaisons L1, L4 et L13. Le noeud N2 est respectivement relié aux noeuds N4 et N5 par les liaisons L2 et L3. Le noeud N10 est respectivement relié aux noeuds N5, N9 et N11 par les liaisons L5, L11 et L12. Le noeud N6 est respectivement relié aux noeuds N5, N7 et N9 par les liaisons L6, L7 et L8. Le noeud N8 est respectivement relié aux noeuds N7 et N9 par les liaisons L9 et L10. Le noeud N13 est respectivement relié aux noeuds N14 et N12 par les liaisons L17 et L16. Et enfin le noeud N11 est respectivement relié aux noeuds N12 et N14 par les liaisons L15 et L14.

Lors de la création du réseau, un administrateur élabore sa topologie (numéro de série et adresse logique des noeuds, liaisons entre équipements et caractéristiques de ces liaisons...). Cette topologie est inscrite dans un terminal CG, appelé centre de gestion, et qui est relié à un noeud doté d'une fonction de routage adaptatif (le noeud N8 sur la figure 2). L'installation du réseau est alors limitée à la connexion, d'après cette topologie, des différentes entités dans leur configuration de sortie d'usine, dite configuration par défaut. Dès que les noeuds et leurs liaisons configurées par défaut sont en service, la phase de découverte du voisinage commence. Les noeuds sont alors repérés par leur numéro de série et il n'existe pas de notion de domaine dans le réseau. Au fur et à mesure de l'apprentissage du voisinage, un domaine, dit domaine de routage adaptatif et noté RAD, est formé à partir des noeuds qui sont dotés d'une fonction de routage adaptatif.

Au début de la phase d'auto-configuration du réseau, le centre de gestion CG se connecte à la fonction de routage adaptatif d'un noeud du réseau par l'intermédiaire de son noeud de raccordement N8 afin d'observer les paquets LSP reçus. L'arrivée d'un paquet LSP indique au centre de gestion que le noeud émetteur de ce paquet et ses liaisons par défaut sont en service, et que le chemin pour les atteindre est connu. Il peut donc dès lors se connecter audit noeud afin de lui transmettre des informations de configuration le concernant, en commençant toutefois par les noeuds les plus éloignés du centre de gestion de façon à éviter tout conflit entre la configuration par défaut de sortie d'usine et la configuration définie par l'administrateur.

Ces informations de configuration transmises par le centre de gestion comportent notamment l'adresse logique du noeud ainsi que les caractéristiques de toutes ses liaisons. Il est possible que de nouvelles liaisons, autres que les liaisons configurées par défaut, soient alors définies. Cela a dans certains cas pour conséquence de révéler de nouveaux noeuds qui sont donc à leur tour configurés par le centre de gestion.

Par ailleurs, chaque noeud doté d'une fonction de routage adaptatif ne doit supporter qu'une taille restreinte de réseau, afin d'éviter que la taille de ses bases et le temps de traitement nécessaires à la mise en oeuvre de cette fonction ne soient trop importants. Pour cela il est habituel d'organiser le domaine de routage adaptatif en une pluralité de domaines, la connaissance de chaque noeud étant limité au domaine auquel il appartient.

Ainsi, d'après la figure 2, le domaine RAD est formé de deux domaines D1 et D2, le domaine D1 étant composé des noeuds N1 à N4 et le domaine D2 des noeuds N5 à N10. Les noeuds N2 et N3 d'une part, les noeuds N10 et N5 d'autre part, servent respectivement de passerelle vers les domaines D2 et D1. Les noeuds N3 et N10 servent également de passerelle de sortie du domaine RAD, permettant ainsi d'atteindre les noeuds N11 à N14 qui, n'étant pas dotés d'une fonction de routage adaptatif, utilisent un routage fixe.

Selon l'invention, le découpage du domaine de routage adaptatif en plusieurs domaines se fait par configuration des liaisons entre les noeuds. Parmi les paramètres configurés pour chaque liaison figure un indicateur définissant le caractère intra-domaine ou extra-domaine de la liaison. Au démarrage, la configuration par défaut des liaisons est de type intra-domaine. Puis, au fur et à mesure que des liaisons sont configurées comme étant de type inter-domaine par le centre de gestion, différents domaines se forment à l'intérieur du RAD. En effet, les noeuds ne maintiennent et n'établissent de circuits virtuels dédiés au routage adaptatif que sur les liaisons intra-domaine de telle sorte qu'au bout d'un certain temps, les noeuds de domaines différents ne s'échangent plus de paquets LSP et s'oublient mutuellement.

A titre d'exemple, et en se reportant à la figure 2, la liaison L3 qui relie les noeuds N2 et N5 est initialement configurée par défaut dans chacun desdits noeuds comme étant une liaison intra-domaine. Un circuit virtuel dédié au routage adaptatif peut donc être établi entre les noeuds N3 et N5 au démarrage, de telle sorte que des paquets LSP émis par les noeuds N5 à N10 sont enregistrés dans les bases LSP des noeuds N1 à N4 et réciproquement. Puis, lors de la phase d' auto-configuration, le centre de gestion configure les noeuds N2 et N5, et en particulier il reconfigure la liaison L3 comme étant une liaison inter-domaine. Ledit circuit virtuel est alors fermé et aucune information relative à la topologie du réseau n'est plus échangée entre les deux noeuds. Il en va de même pour les noeuds N3 et N10, de telle sorte qu'au bout d'un certain temps, les paquets LSP concernant les noeuds N5 à N10 sont effacés des bases LSP des noeuds N1 à N4 et réciproquement formant ainsi deux domaines distincts D1 et D2.

De façon à pouvoir permettre le routage inter-domaines, chaque noeud comporte de plus une table, dite table de routage configurable, qui est prioritaire vis-à-vis des tables de routage adaptatif comme on le verra par la suite, et qui contient entre autre la liste des noeuds qui n'appartiennent pas au même domaine avec, selon le cas, le noeud passerelle ou la liaison à utiliser pour atteindre le domaine auquel ils appartiennent. Cette table est également fournie par le centre de gestion en phase d'auto-configuration.

Enfin, dans l'exemple de la figure 2, il a de plus été supposé que les noeuds N11 à N14 n'étaient pas dotés d'une fonction de routage adaptatif selon l'invention. Lors de la phase de découverte des voisins, deux cas sont donc susceptibles de se présenter. Dans le cas où les lignes L12 et L13, qui relient respectivement le noeud N10 au noeud N11 et le noeud N3 au noeud N14, sont configurées comme des lignes inter-domaines, les noeuds N11 et N14 ne reçoivent pas de paquets d'appel spécifiques de découverte des voisins. En revanche, si elles sont configurées comme des liaisons intra-domaine, ce qui correspond à la configuration par défaut, les noeuds N11 et N14 ne confirmeront pas l'appel spécifique émis par les noeuds N3 et N10, et ne seront par conséquent pas inclus dans le domaine de routage adaptatif.

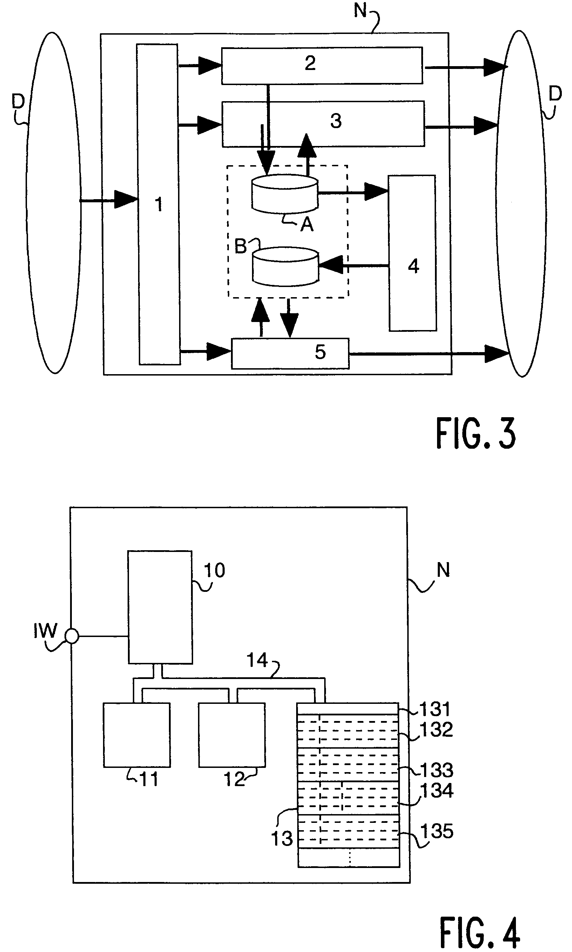

La figure 3 résume schématiquement le fonctionnement d'un noeud N doté d'une fonction de routage adaptatif:
- Une fonction 1 de réception permet de séparer les paquets reçus en provenance d'un domaine D auquel le noeud appartient: les paquets d'appel X25 de demande d'ouverture d'un circuit virtuel dédié au routage, qui ne contiennent aucune destination, sont traités par la fonction 2 de découverte du voisinage décrite précédemment; les paquets d'appel X25 de demande d'ouverture d'un circuit virtuel pour une communication avec un noeud déterminé sont traités par une fonction 5 de routage; et les paquets LSP sont traités par une fonction 3 d'inondation/mise-à-jour.
- La fonction 3 d'inondation/mise-à-jour calcule périodiquement, ou dès qu'un changement se produit sur une des liaisons du noeud, les coûts pour chaque métrique de chacune de ces liaisons, de façon à former un paquet LSP qui est enregistré dans la base LSP, notée A sur la figure, puis diffusé sur le domaine D. Elle enregistre et diffuse de même les paquets LSP reçus en provenance d'autres noeuds du domaine D.
- Une fonction 4 de décision calcule pour chaque métrique les routes permettant d'atteindre chaque noeud du domaine à partir des informations contenues dans la base A du noeud. Un arbre des plus courtes routes est déterminé à partir de ces résultats pour chaque métrique conformément à la méthode décrite dans la demande de brevet français n°9303086 déposée par la demanderesse le 17 mars 1993. Les arbres ainsi obtenus sont enregistrés dans une autre base B.
- D'après la fonction 5 de routage, lorsqu'un noeud cherche à établir une communication avec un noeud distant, ou lorsqu'il reçoit l'ordre de faire transiter la communication dans son domaine, il recherche tout d'abord dans sa table de configuration si la destination de ce paquet correspond à une passerelle de sortie du domaine. Dans ce cas le paquet est routé sur l'adresse de cette passerelle au lieu d'être routé sur l'adresse appelée du paquet. Et dans ce cas, selon une variante de l'invention, pour éviter de devoir déterminer la passerelle de sortie du domaine au niveau de chaque noeud intermédiaire faisant partie de la route vers la passerelle de sortie, c'est l'adresse de cette passerelle qui est inscrite dans le champ adresse appelée du paquet d'appel X25, l'adresse finale étant véhiculée dans son champ de services complémentaires (C5).

Une fois l'équipement à atteindre déterminé (noeud destinataire ou passerelle de sortie du domaine), l'arbre de routage indique sous forme d'une liste de noeuds la route minimisant la métrique retenue, ainsi que la liaison de sortie qui correspond au premier noeud de cette route.

Dans un premier mode de réalisation, le choix de la métrique utilisée se fait pour l'ensemble d'un domaine à un instant donné par configuration. Ce choix est avantageusement transmis aux différents noeuds du domaine par l'intermédiaire du centre de gestion. Dans un autre mode de réalisation, le choix de la métrique est indiqué dans le paquet d'appel X25. Cette solution présente toutefois l'inconvénient d'impliquer l'utilisation d'un format particulier de paquet, différent du format X25 tel qu'il est actuellement normalisé.

A titre d'exemple, et en se reportant à la figure 2, si le noeud N7 cherche à établir une communication avec le noeud N1 appartenant au domaine D1, il recherche tout d'abord ce noeud dans sa table de configuration. Il obtient ainsi le noeud passerelle à utiliser pour atteindre le noeud N1, c'est-à-dire N10. La route à suivre la moins coûteuse pour atteindre N10 est sélectionnée dans l'arbre de routage correspondant à la métrique utilisée, et un paquet d'appel est transmis à destination de ce noeud passerelle. Le noeud N10 recherche lui-même dans sa table de configuration le noeud auquel il doit transmettre ce paquet d'appel, c'est-à-dire le noeud N3. Le noeud N3 trouve dans son arbre de routage le destinataire de ce paquet ainsi que la meilleure route à suivre pour l'atteindre.

La figure 4 représente un commutateur X25 selon l'invention, noté N. Un tel commutateur comporte au moins une interface réseau X25 notée IW qui est reliée à un processeur d'applications 10 constitué par exemple par un 68360 de Motorola. Ce processeur 10 est lui-même relié par un bus 14 à une mémoire 11 qui contient notamment le numéro de série du noeud. Le processeur 10 est également relié par ce bus 14 à une mémoire statique 12 qui contient les instructions de fonctionnement du processeur 10, notamment celles nécessaires à la mise en oeuvre de l'invention, et à une mémoire vive 13 contenant des données, et en particulier son adresse logique à l'emplacement 131, les numéros et les caractéristiques de ses liaisons à l' emplacement 132, sa table de configuration à l'emplacement 133, les arbres de routages à l'emplacement 134 et sa base LSP à l'emplacement 135.

Il va de soi que des modifications peuvent être apportées au mode de réalisation qui vient d'être décrit, notamment par substitution de moyens techniques équivalents sans que l'on sorte pour cela du domaine de la présente invention.

En particulier, il a été choisi, pour la gestion des réseaux multi-domaines, de considérer que chaque domaine est indépendant, le passage d'un domaine à un autre se faisant par routage fixe. Mais le principe du routage multi-niveaux préconisé par IS-IS rentre aussi dans le cadre de l'invention.

## Revendications

1. Système de transmission de données comportant une pluralité de noeuds (N1 à N14) reliés entre eux par des liaisons (L1 à L17) certains de ces noeuds au moins (N1 à N10) étant dotés de moyens de découverte de leurs voisins pour la mise en oeuvre d'une fonction de routage adaptatif,
caractérisé en ce que, le système de transmission de données fonctionnant en mode connecté, afin de découvrir ses voisins, au moins deux de ces noeuds comportent des moyens pour:
- émettre un message d'appel sur au moins certaines de leurs liaisons,
- sur réception d'un tel message d'appel en provenance d'un noeud voisin, établir une session avec ledit noeud,
- dès qu'une session est établie avec un voisin, lui transmettre un message de reconnaissance indiquant leur propre identifiant.

2. Système de transmission de données selon la revendication 1, caractérisé en ce que l'identifiant d'un noeud est composé de son numéro de série ainsi que de son adresse logique.

3. Système de transmission de données selon la revendication 2, caractérisé en ce qu'il comporte un terminal (CG), appelé centre de gestion et dédié à la gestion du système, raccordé à un noeud (N8) par l'intermédiaire duquel il établit des sessions avec chacun des noeuds du système (N1 à N14) de façon à leur transmettre des informations de configuration.

4. Système de transmission de données selon l'une des revendications 1 à 3, caractérisé en ce que les noeuds du système (N1 à N10) qui sont dotés de ladite fonction de routage adaptatif sont répartis dans au moins un domaine de routage (RAD, D1, D2).

5. Noeud de réseau (N) destiné à être utilisé dans un système de transmission de données en mode connecté entre une pluralité de noeuds reliés par des liaisons, et doté de moyens de découverte de ses voisins pour la mise en oeuvre d'une fonction de routage adaptatif,
caractérisé en ce que lesdits moyens consistent à:
- émettre un message d'appel sur au moins certaines de ses liaisons,
- sur réception d'un tel message d'appel en provenance d'un noeud voisin, établir une session avec ledit noeud,
- dès qu'une session est établie avec un voisin, lui transmettre un message de reconnaissance indiquant son propre identifiant.

6. Noeud selon la revendication 5, caractérisé en ce que son identifiant est composé de son numéro de série ainsi que de son adresse logique.

7. Commutateur selon l'une des revendications 5 ou 6, destiné à être utilisé dans un réseau de commutation par paquet de type X25.
